# EUROPEAN PATENT APPLICATION

(11) **EP 2 113 907 A1**
(43) Date of publication of application: **04.11.2009**
(21) Application number: 07713494.8
(22) Date of filing: 22.02.2007
(51) Int. Cl.: G10K 15/02, G11B 27/34

(54) **MUSIC REPRODUCING DEVICE AND MUSIC REPRODUCING METHOD**

(71) Applicant: Fujitsu Limited, Kawasaki-shi, Kanagawa 211-8588 (JP)
(72) Inventor: KATSUMATA, Hajime, Kawasaki-shi Kanagawa 211-8588 (JP)
(74) Representative: Stebbing, Timothy Charles
(86) International application number: PCT/JP2007/000112
(87) International publication number: WO 2008/102413

(57) **Abstract**

A music playback apparatus playing back music, comprising: a music data storing unit storing a plurality of pieces of music-track data; a metadata storing unit storing metadata corresponding to the respective pieces of music-track data; a sound data conversion unit converting the metadata and so on into sound data; a playback unit playing back the music-track data and the sound data; and a control unit reading out and inputting, to the sound data conversion unit, metadata corresponding to the music-track data to be played back from the metadata storing unit, and inputting sound data output from the sound data conversion unit into the playback unit to make the playback unit perform sound playback at a timing of either before playback, during playback or after playback of the music-track data.

## Description

### FIELD

The present invention relates to a music playback apparatus and a playback method of music, and more particularly, to a technique for, while playing music, notifying a user of metadata and the like of the music being played back.

### BACKGROUND

In recent years, more people are enjoying music in a BGM-like manner using a portable-type music playback apparatus while doing other things. Particularly, the number of people who listen to music using portable music playback apparatus while commuting to work or school is increasing. Furthermore, in an information processing apparatus such as a personal computer, music has come to be played back by software such as a media player, and more ways to enjoy have been introduced such as to activate a media player on the background to playback music, and to work with the personal computer while listening to the music. Meanwhile, music has also been enjoyed using stereo components and so on in the same way as before.

When enjoying music in a BGM-like manner while doing other things in this way, there is a problem that it is difficult to review information related to the music being played back, that is, metadata such as the title, album name, artist name, genre, release date, tie-up information about the music (hereinafter, simply referred to as metadata). In other words, in a case where a track is played back by a portable music playback apparatus, the apparatus is not necessarily provided with a display apparatus, and even if a display apparatus is provided, the display unit may be small and difficult to see, or it might be difficult to see the display while commuting to work or school. Meanwhile, when enjoying music while working with a personal computer and the like, a trouble occurs that the music playback software activated on the background must be brought to foreground. In addition, with stereo components having a small display area, reviewing the metadata may be difficult.

Furthermore, for example, there is a case where a plurality of tracks stored in a large-capacity storage device of a music playback apparatus is continuously played back in accordance with certain track-selection rules including random, and there has been needs for, in such a case, reviewing, according to what track-selection rule the tracks are selected and played back. However, the review is impossible with a music playback apparatus that does not have a display device, while even with a music playback apparatus that has a display device, the display unit may be small, or it may be difficult to see the display unit in a packed train.

As described above, since many music playback apparatuses has conventionally notified users of metadata and the like by displaying it on a display apparatus and the like, there has been a problem that users enjoying music in a BGM-manner cannot easily obtain information about the music and the control information about the playback of the music.

Meanwhile, patent document 1 discloses a technique for, during the playback of music data in a music storage medium such as a CD (Compact Disc) and an MD (Mini Disc), obtaining many pieces of information related to a track being played back and displaying them, but cannot solve the above problem.

In addition, patent document 2 discloses a technique with which information about a music track recorded in a recording medium can be obtained as sound information, but information about each music track has to be input as a sound signal in the recording medium, and when there are a large number of music tracks, a large amount of work has to be done for inputting the information about the music tracks.
[Patent document 1] Japanese Laid-open Patent Application No. 2000-298978
[Patent document 2] Japanese Laid-open Patent Application No. 2004-79071

### SUMMARY

The present invention has been made in view of such a situation, and an objective of the present invention is to provide a music playback apparatus and a music playback method for, during the playback of music-track data, notifying a user of metadata corresponding to the music-track data and control information about the playback by sound, to enable the user to easily obtain information about the music being played back.

According to an aspect of the present invention, a music playback apparatus playing back music, includes a music data storing unit storing a plurality of pieces of music-track data; a metadata storing unit storing metadata corresponding to the respective pieces of music-track data; a sound data conversion unit converting the metadata and so on into sound data; a playback unit playing back the music-track data and the sound data; and a control unit reading out and inputting, to the sound data conversion unit, metadata corresponding to the music-track data to be played back from the metadata storing unit, and inputting sound data output from the sound data conversion unit into the playback unit to make the playback unit perform sound playback at a timing of either before playback, during playback or after playback of the music-track data.

By this, a user can obtain, by sound, information and the like about music-track data being played back at a certain timing during the music playback. In addition, since metadata is played back while being converted into sound data, metadata does not need to be inputting a large amount of sound in the music playback apparatus.

### BRIEF DESCRIPTION OF DRAWINGS

Fig. 1 is a diagram illustrating the principle configuration of the present invention.
Fig. 2 is a diagram illustrating the configuration of a music playback apparatus being an embodiment of the present invention.
Fig. 3 is a diagram illustrating an example of a music data group and a metadata group.
Fig. 4 is a diagram illustrating an example of control information.
Fig. 5 is a diagram illustrating an example illustrating a complementary setting.
Fig. 6 is a diagram illustrating a flow in a case of playing back metadata before the playback of music-track data in a music playback apparatus.
Fig. 7 is a diagram illustrating a detail flow of "PLAYBACK METADATA" (S605) in Fig. 6.
Fig. 8 is a diagram illustrating a detail flow of "PLAYBACK CONTROL INFORMATION" (S610) in Fig. 6.
Fig. 9 is a flow diagram explaining about a processing operation of performing playback with a redundant part eliminated, in a case of playing back, in metadata, those including a common property value continuously in "PLAYBACK METADATA" (S605) in Fig. 6.
Fig. 10 is a diagram illustrating a flow diagram of the time when a selection item is selected in the music playback apparatus.
Fig. 11 is a diagram illustrating the hardware configuration of an information processing apparatus that realizes the music playback apparatus.
Fig. 12 is a diagram illustrating the loading of a program onto an information processing apparatus.

### DESCRIPTION OF EMBODIMENTS

Hereinafter, embodiments of the present invention are described with reference to the drawings.

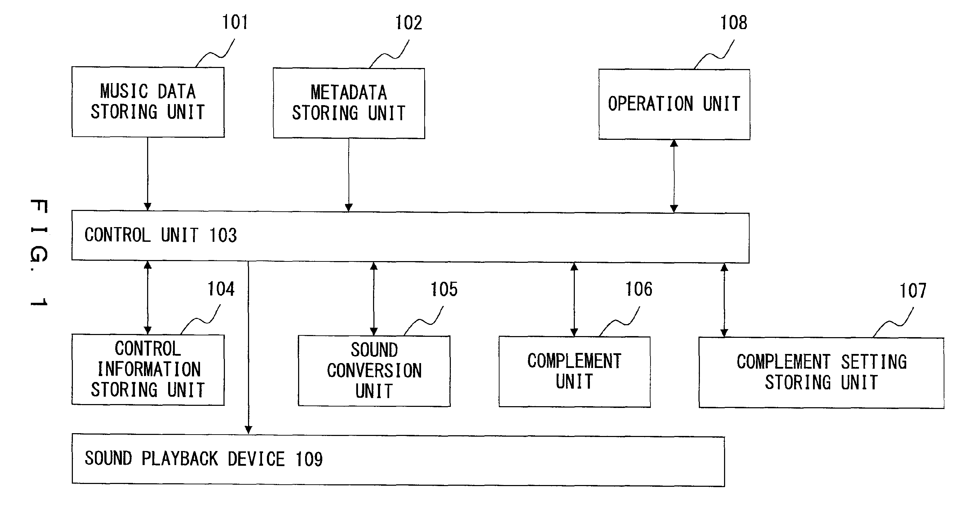

The principle configuration of the present invention is illustrated in Fig. 1.

As illustrated in Fig. 1, the music playback apparatus of the present invention is composed of a music-track data storing unit 101 storing a plurality of pieces of music data, a metadata storing unit 102 storing metadata that consists of information about each music-track data, for example the title of a track, album name, artist name, genre, release date, tied-up information and so on, an operation unit 108 for a user to conduct instructions such as playback or stop of music and adjustment of the volume, a sound conversion unit 105 converting metadata and the like to sound data, a complement unit 106 performing processes of generating sentence data including particles and auxiliary verbs from respective property values (nouns) of metadata that consists of a plurality of properties; converting, according to the language setting, to the corresponding language; and converting the expression in sentence data to a specified dialect, tone of speech, etc., a complementary setting storing unit 107 storing various settings for the conversion of metadata to sentence data, a sound playback unit 109 playing back music-track data, sound data and the like, a control unit 103 performing the control of each unit, and a control information storing unit 104 storing control information and the like of the apparatus related to the playback status.

The music playback apparatus of the present invention is configured to use metadata corresponding to music-track data being the target of playback to notify a user of the metadata before or after or during the playback or at a selected time by sound, so that the music-track information can be understood without looking at a display device and the like. In addition, the configuration is made not to merely perform notification of metadata consisting of a group of a plurality of nouns, but to perform notification using a human spoken language, for example, when the track title is ABC, album title is DEF, and artist name is XYZ, "The track title is ABC," and "This is ABC by XYZ". Furthermore, the configuration is also made to, when there are a plurality of music tracks being the target of playback, and there is a common property value (noun) among the plurality of the music tracks, announce the information about the group of music tracks by performing notification of the common noun by sound. For example, notification is performed as "the album DEF is going to be played back" when playing back a series of music in an album continuously.

Meanwhile, the configuration is also made to, when a number of music tracks are stored in the music data storing unit 101 and played back continuously in accordance with certain track-selection rules including random, perform sound notification of the track-selection rules. For example, notification is performed as "the album DEF is going to be played back" before playing back a series of music in an album, and as "random playback is performed" when performing random playback.

In addition, the configuration is also made to be able to, when notifying a user of each information, provide information in a more familiar way by eliminating contents for which notification has been done once; changing the language for notification; and changing wording and tone of speech for notification according to the time zone or the area setting of the user.

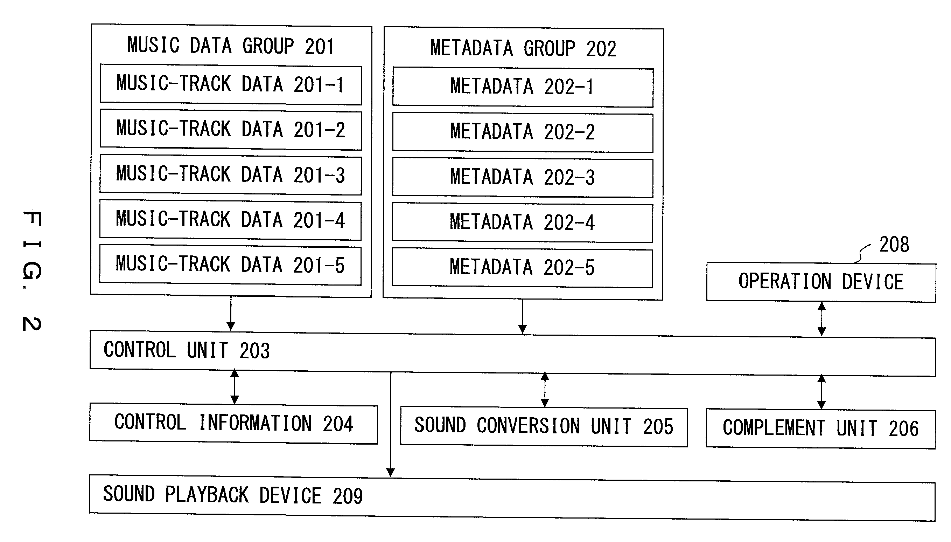

Next, with reference to Fig. 2 through Fig. 10, the music playback apparatus being an embodiment of the present invention is explained, to make the present invention clearer. The music playback apparatus corresponds to a portable music player on which a large-capacity storage device is mounted.

The music playback apparatus being an embodiment of the present invention is composed of a music data group 201, a metadata group 202, a control unit 203, control information 204, a sound conversion unit 205, a complement unit 206, a complementary setting 207, an operation device 208, and a sound playback device 209.

The music data group 201 exists in the large-capacity storage device, and stores a plurality of pieces of music data 201-1 through 201-N.

Meanwhile, the metadata group 202 is information about each music track corresponding to each piece of music data 201-1 through 201-N. For example, the properties constituting the metadata are "track name", "album name", "artist name", "genre name", "release date" and so on, constituted by information related to the corresponding music-track data.

The operation device 208 is composed of an input button for a user to perform instructions such as playback or stop of music, and adjustment of the volume, and so on.

The sound playback device 209 is a device for playing back sound data and transmitting it to an output device such as a speaker and the like.

In addition, the complement unit 206 is a place where a process of generating sentence data frommetadata is performed on the basis of the setting specified in the complementary setting 207. The details are to be described later.

The control information 204 is a place where information indicating the playback status in the playback apparatus is stored.

The sound conversion unit 205 is a part where a process of converting various data into sound data is performed.

The control unit 203 is a place where the control of each unit is performed.

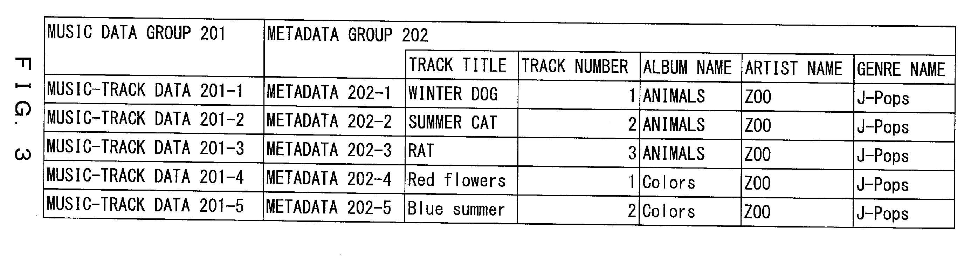

Next, how the music playback apparatus illustrated in Fig. 2 operates is explained, while, for the explanation, specific examples of the music data group 201, metadata group 202, control information 204, complementary setting 207 are illustrated in Fig. 3, Fig. 4, Fig. 5, and used for the explanation.

Fig. 3 illustrates an example of the music data group 201 and metadata group 202. The music data group 201 consists of music-track data 201-1 through 201-5, and corresponding to them, metadata 202-1 through 202-5 exist in the metadata group 202. Each of the metadata 202-1 through 202-5 consists of five properties of "track name", "track number", "album name", "artist name" and "genre name". The music-track data 201-1 through 201-5 and the metadata 202-1 through 202-5 are stored in a storage device when a user obtains music-track data by purchase and the like.

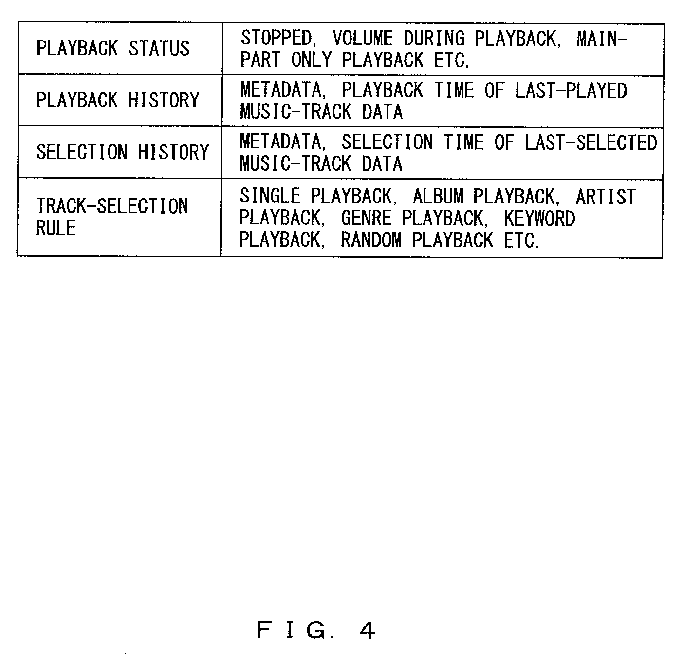

Meanwhile, Fig. 4 illustrates an example of the control information 204. The control information 204 is composed to include the status of playback, playback history, selection history and track-selection rule. The status of playback indicates the status of playback such as stop, playing, volume, playing the main part only and so on, in the music playback apparatus. In addition, the playback history is the memory of the metadata, playback time and so on of the last-played back music-track data. Meanwhile, the selection history is the memory of the metadata, selection time, and so on of the last-selected music-track data. Meanwhile, the track-selection rule is the memory of the rules for the track selection in a case in which the music playback apparatus performs continuous playback in accordance with a certain rule such as single playback, album playback, artist playback, genre playback, keyword playback, random playback and so on. The control information 204 is updated by the control unit 203 as needed depending on the status of the control of the music playback apparatus.

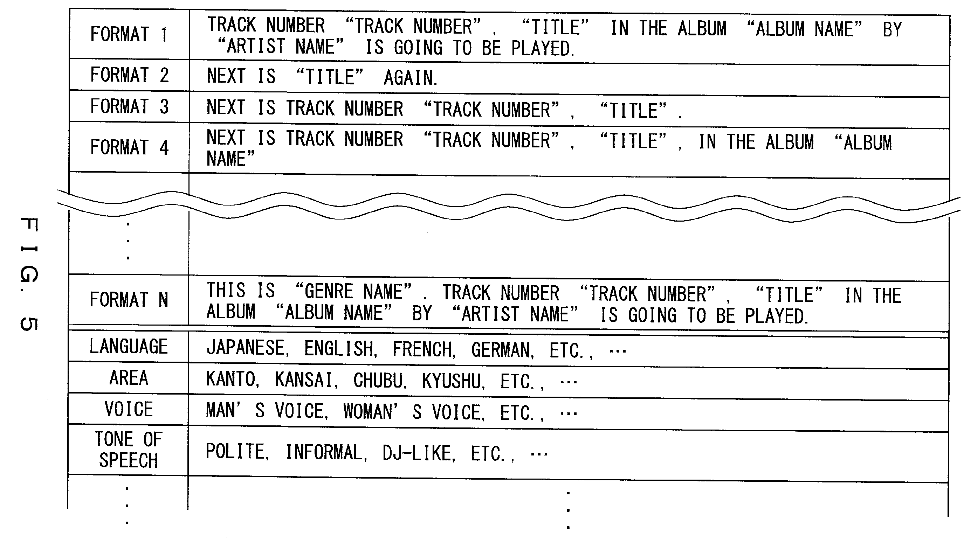

Meanwhile, Fig. 5 illustrates an example of the complementary setting 207. Format 1 through format N are the specification of patterns for inserting particles and the like between a plurality of property values (nouns) constituting metadata, to generate sentence data. In addition, the language is the specification of, when generating sentence data from metadata for the notification to a user, which language (for example, Japanese, English, French, Germany etc.) is to be used for the generation. In addition, the area specifies, when for example, the language setting is Japanese and furthermore, the notification to the user is performed in a dialect and the like, the dialect is to be the dialect of which geographic area. The voice is the specification of the type of voice such as an adult man's voice, adult woman's voice, child's voice and so on for performing sound notification to the user. In addition, the tone of speech specifies whether the tone of speech is to be a polite tone, informal tone, and so on. Meanwhile, the various settings in the complementary setting 207 can be changed and registered from the operation device 208.

Hereinafter, the operation of the music playback apparatus is described: first, (1) the operation in the process of playing back metadata at a given timing during the playback of a music track by a sound playback device and performing notification of the control information is explained; next, (2) the process operation of performing playback with a redundant part eliminated when playing back, in metadata, those including a common property value continuously is explained; and next, (3) the operation at the time when a selection item is selected in the music playback apparatus is explained.

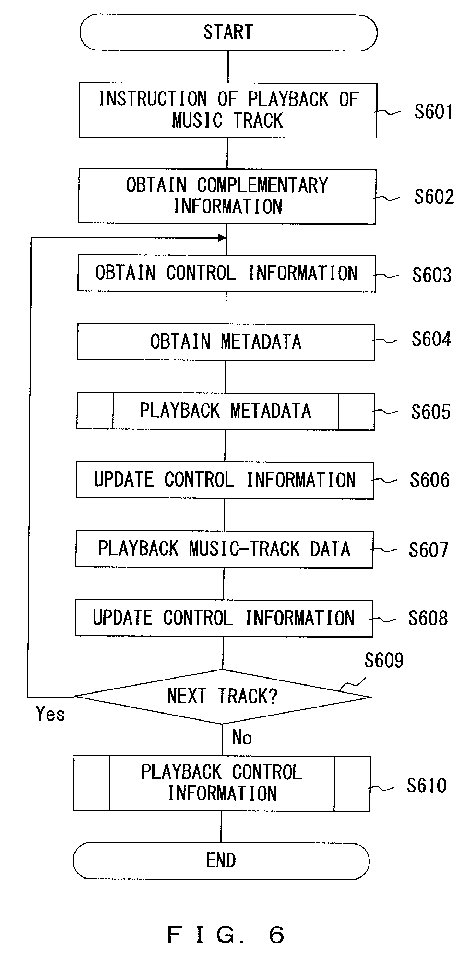

First, (1) the operation in the process of playing back metadata at a given timing during the playback of a music track in a sound device and performing notification of the control information is explained with reference to Fig. 6, Fig. 7, Fig. 8.

Fig. 6 is a diagram illustrating a flow of playing back metadata before the playback of a music track for the notification to a user.

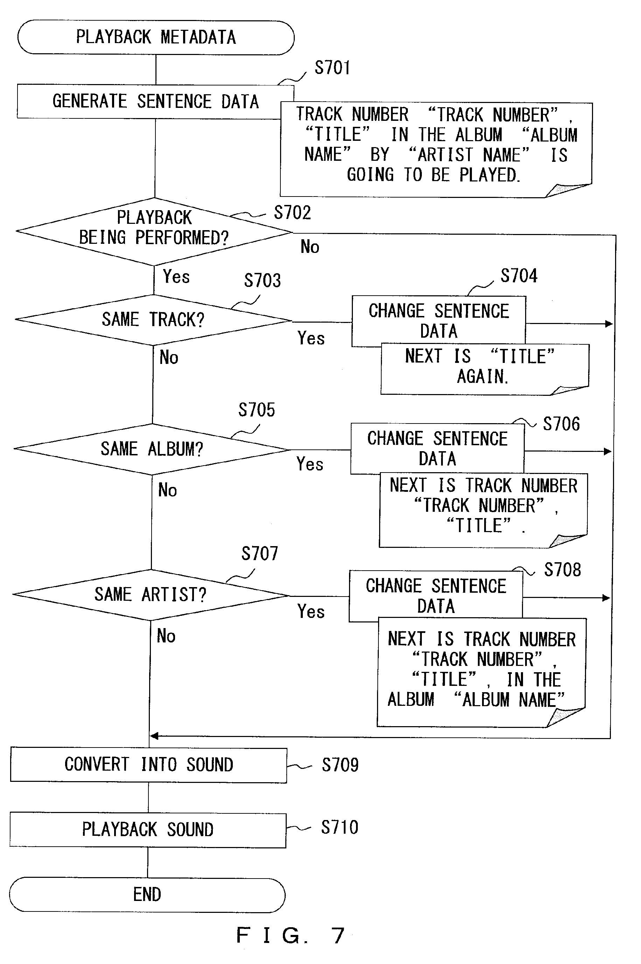

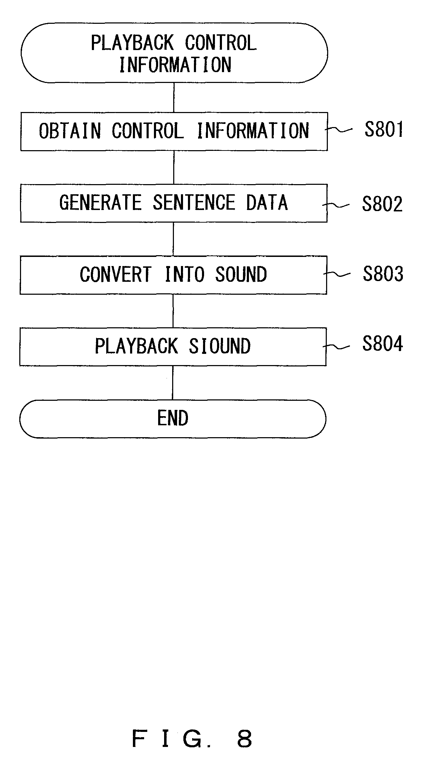

First, in S601, an instruction for the playback of a music track is issued from a user. In S602, the setting specified in the complementary setting 207 is obtained, and the control information stored in the control information 204 is obtained in S603. Meanwhile, in S604, metadata corresponding to the music-track data of which playback has been specified is obtained from the metadata group 202. In S605, the metadata is played back. S605 will be explained in more detail with reference to Fig. 7. In S606, the control information stored in the control information 204 is updated. In S607, the music-track data is played back. In S608, the control information stored in the control information 204 is updated. Then, whether or not there is specification for a track to be played back next in S609, and when there is a next track (Yes), return to S603 is performed. When there is no next track (No), the control information is played back in S610. S610 will be explained in more detail with reference to Fig. 8.

Meanwhile, while metadata is played back before the playback of a music track in a case in which the metadata playback is processed at the timing illustrated in Fig. 6, the timing of the playback of metadata may be adjusted by setting S605 at the timing after the playback of music-track data (S607), or at the timing during the playback of music-track data (S607). The setting of the timing adjustment may be, for example, set in the complementary setting 207, and the configuration may also be made so as to include the timing of the playback of metadata as the control information.

With reference to Fig. 7, "PLAYBACK METADATA" (S605) is described in detail.

First, in S701, the complement unit 206 generates sentence data on the basis of the metadata read out in S604. The sentence data becomes, from each value of artist name, album name, track number, track name that are the respective properties constituting the metadata illustrated in Fig. 3 and the pattern of format 1 in the complementary setting illustrated in Fig. 5, a sentence "Track number 'track number', 'title', in the album 'album name' by 'artist name' is going to be played". Next, in S702, whether playback is being performed or not is determined referring to the control information 204, and when playback is not being performed (No), move to S709 is performed. When playback is being performed (Yes), move to S703 is performed. In S703, whether or not the track is the same is determined, and when the track is not the same (No), move to S705 is performed. When the track is the same (Yes), move to S704 is performed, and the sentence data is changed to "Next is 'track name' again" in accordance with the pattern of format 2 in the complementary setting illustrated in Fig. 5, and move to S709 is performed. In S705, whether or not the album is the same is determined, and when the album is not the same (No), move to S707 is performed. When the album is the same (Yes), move to S706 is performed, and the sentence data is changed to "Next is track number 'track number', 'track name'" in accordance with the pattern of format 3 in the complementary setting illustrated in Fig. 5, and move to S709 is performed. In S707, whether or not the artist is the same is determined, and when the artist is not the same (No, move to S709 is performed. When the artist is the same (Yes), move to S708 is performed, and the sentence data is changed to "Next is track number 'track number' , 'track title' in the album 'album title"' in accordance with the pattern of format 4 in the complementary setting illustrated in Fig. 5, and move to S709 is performed. In S709, the sentence data is converted into sound data, and in S710, the sound data is played back for the notification to the user.

Meanwhile, with reference to Fig. 8, "PLAYBACK CONTROL INFORMATION" (S610) in Fig. 6 is described in detail.

First, in S801, the control information 204 is read out. In a case of notifying a user of the track-selection rule in the control information, the control unit 203 obtains a track-selection rule "single playback". InS802, the complement unit 206 generates sentence data from the track-selection rule "single playback" and a format in the complementary setting (not illustrated in Fig. 5). In S803, the generated sentence data is converted into sound data, and the sound data is played back in S804. Meanwhile, while the explanation has been made for an example of performing notification of the track-selection rule as control information, the configuration may be made so as to perform notification of any information in any control information 204, such as the volume information, playback history and selection history of the playback apparatus in the control information.

Thus, by the operation of the sound playback apparatus illustrated in Fig. 6, Fig, 7, Fig. 8, it becomes possible to playback, by sound, metadata that has been converted into a sentence for the notification to the user, and to perform notification of control information about the music playback to the user: for example, in a case in which continuous playback of a plurality of pieces of music-track data is being performed according to certain rules including random playback, notification of the track-selection rule, and in a case in which single playback is being performed, the notification that single playback is being performed, are possible.

Further, to explain it more specifically, the process is performed as follows.

A user instructs the control unit 203, using the operation device 208, to playback the music-track data 201-1 (S601) . The control unit 203 reads out the complementary setting 207 (for example, assumed as: complement in Japanese, area: Kanto) (S602). The control unit 203 reads out, from the control unit 204, the playback status (stopped) and playback history (Blue Summer, 2, Colors, ZOO, J-Pops) (S603). The control unit 203 reads out, from the metadata 202-1 corresponding to the music-track data 201-1, the track name (WINTER DOG), track number (1), album name (ANIMALS), artist name (ZOO), genre name (J-Pops) (S604). The control unit 203 inputs the read out complementary setting, control information, metadata into the complement unit 206, and performs the complementary process of generating sentence data in Japanese with the complementary setting, to generate sentence data in accordance with the complementary setting and the respective property values (nouns) constituting the metadata (S701). For example, "Track number 1, WINTER DOG in the album ANIMALS by ZOO is going to be played" is obtained. The complement unit 206 changes the sentence data as needed, by comparing the playback status, playback history and metadata (S702-S708). For example, when playback is being performed and the same track as the last one is to be played back, change to "Next is WINTER DOG again" is performed. Meanwhile, in a case of a different track (SUMMER CAT) in the same album as the last one and when playback is being performed, change to "Next is track number 2, SUMMTER CAT" is performed. In addition, in a case of a different song (Red Flowers) by the same artist as the last one and when playback is being performed, change to "Next is track number 1, Red Flowers in the album Colors" is performed. The complement unit 206 outputs the sentence data to the control unit 203. The control unit 203 inputs the sentence data to the sound conversion unit 205. The sound conversion unit 205 converts the sentence data into sound data, and outputs to the control unit 203 (S709) . The control unit 203 inputs the sound data to the sound playback device 209. The sound playback device 209 performs the playback of the sound data (S710) . The user hears "Track number 1, WINTER DOG in the album ANIMALS by ZOO is going to be played". The user hears the music-track data 201-1. After the playback of the music-track data 201-1 is completed, the playback history in the control information is updated to the metadata of the last-played track (S608). The control unit 203 then determines whether or not there is a next track (S609). When there is no next track, the control unit 203 sets the playback status to the stopped status. Then, the track-selection rule being the control information is played back (S610). First, the control unit 203 obtains the track-selection rule from the control information 204 (S801). Next, the obtained track-selection rule and the complementary setting (complement in Japanese, area: Kanto) is input to the complement unit 206, and the complement unit 206 generates sentence data (S802) and outputs to the control unit 203. For example, the sentence data becomes, in a case in which single playback is performed, "The playback is completed", in cases of album playback, artist playback, genre playback and random playback, "Played was the album 'album name'", "Played was 'artist name'", "Played was 'genre name'", "Played by random playback", respectively. The control unit 203 inputs the sentence data to the sound conversion unit 205, and the sound conversion unit 205 converts the sentence data into sound data and outputs to the control unit 203 (S803). The control unit 203 inputs the sentence data into the sound playback device 209; the sound playback device 209 performs the playback of the sound data; and the user hears the track-selection rule (S804).

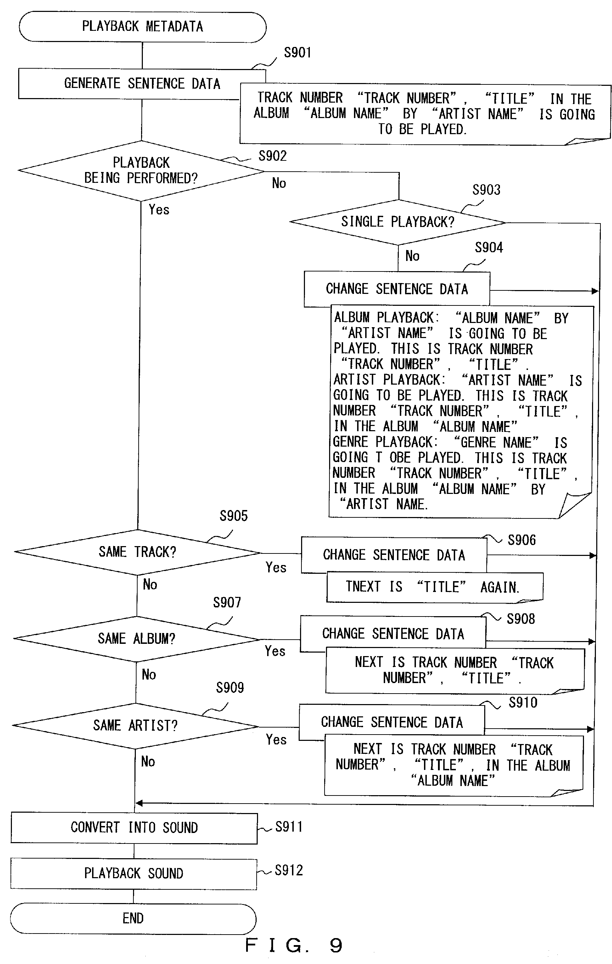

Next, (2) the process operation of performing playback with a redundant part eliminated when playing back, in metadata, those including a common property value consecutively, is explained by referring to Fig. 9.

Fig. 9 is also a flow diagram describing "PLAYBACK METADATA" (S605) in Fig. 6 in detail.

First, in S901, the complement unit 206 generates sentence data on the basis of the metadata read back in S604. The sentence data becomes, from each value of the artist name, album name, track number, track name that are the respective properties constituting the metadata illustrated in Fig. 3 and the pattern of format 1 in the complementary setting illustrated in Fig. 5, a sentence "Track number 'track number', 'title', in the album 'album name' by 'artist name' is going to be played". Next, in S902, whether playback is being performed or not is determined referring to the control information 204, and when playback is not being performed (No), move to S903 is performed. When playback is being performed (Yes), move to S905 is performed.

In S903, whether or not single playback is performed is determined referring to the control information 204, and when single playback is performed (Yes), move to S911 is performed. When single playback is not performed (No), the sentence data is changed in S904. Referring to the format for the sentence-data generation specified in the complementary setting while it is not illustrated in the complementary setting in Fig. 5, when album playback is performed, change to a sentence "The album 'album' by 'artist name" is going to be played. This is track number 'track number', 'title'" is performed; when artist playback is performed, change to a sentence "'Artist name' is going to be played. This is 'track number 'track number' , 'title' in the album 'album name' is going to be played" is performed; and when genre playback is performed, change to a sentence "Genre name' is going to be played. This is track number 'track number', 'title', in the album 'album name' by 'artist name'" is performed. Then, move to S911 is performed.

In S905, whether the track is the same or not is determined, and when the track is not the same (No), move to S907 is performed. When the track is the same (Yes), move to S906 is performed and the sentence data is changed. The sentence data is changed to "Next is 'title' again" in accordance with the pattern of format 2 in the complementary setting illustrated in Fig. 5. Then, move to S911 is performed.

In S907, whether or not the album is the same is determined, and when the album is not the same (No), move to S909 is performed. When the album is the same (Yes), move to S908 is performed, and the sentence data is changed to "Next is track number 'track number' , 'track name'" in accordance with the pattern of format 3 in the complementary setting illustrated in Fig. 5. Then, move to S911 is performed.

In S909, whether or not the artist is same is determined, and when the artist is not the same (No), move to S911 is performed. When the artist is the same (Yes), move to S910 is performed, and the sentence data is changed. The sentence data is changed to "Next is track number 'track number', 'track title' in the album 'album title'" in accordance with the pattern of format 4 in the complementary setting illustrated in Fig. 5. Then, move to S911 is performed.

In S911, the sentence data is converted into sound data, and in S912, the sound data is played back for the notification to the user.

By the operation of the sound playback apparatus illustrated in Fig. 9, when a property value having contents that are the same as the information about which notification was performed to the user last time is included, in the respective property values constituting metadata, the value can be eliminated. By this, a redundant part can be eliminated, and more natural notification can be performed without giving the user the feeling that notification of information is performed mechanically.

The processes in Fig. 6, Fig. 8, Fig. 9 are explained in more detail as follows.

A user instructs the control unit 203, using the operation apparatus 208, to playback the album (ANIMALS) (the music-track data 201-1, 201-2, 201-3) (S601) . The control unit 203 reads out the complementary setting 207 (for example, assumed as: complement in Japanese, area: Kanto) (S602). The control unit 203 reads out, from the control unit 204, the playback status (stopped), and playback history (Blue Summer, 2, Colors, ZOO, J-Pops) (S603). The control unit 203 reads out, from the metadata 202-1 corresponding to the music-track data 201-1, the track name (WINTER DOG), track number (1), album name (ANIMALS), artist name (ZOO), genre name (J-Pops) (S604). The control unit 203 inputs the read out complementary setting, control information, metadata into the complement unit 206, and performs the complementary process of generating sentence data in Japanese with the complementary setting, to generate sentence data in accordance with the complementary setting and the respective property values (nouns) constituting the metadata (S901). According to the format 1 in the complementary setting, "Track number 1, WINTER DOG in the album ANIMALS by ZOO is going to be played" is obtained.

The complement unit 206 performs a process of changing the sentence data as needed, by comparing the playback status, playback history in the control information 204 and the metadata. In this case, since the playback status in the control information is the stopped status, move to S903 is performed in S902. Since album playback is being performed, move to S904 from S903 is performed, and change of the sentence data is performed. The sentence data is changed to "The album ANIMALS by ZOO is going to be played. This is track number 1, WINTER DOG". Then, the complement unit 206 outputs the sentence data to the control unit 203, The control unit 203 inputs the sentence data to the sound conversion unit 205. The sound conversion unit 205 converts the sentence data into sound data, and outputs to the control unit 203 (S911). The control unit 203 inputs the sound data to the sound playback device 209. The sound playback device 209 performs the playback of the sound data (S912). The user hears "The album ANIMALS by ZOO is going to be played. This is track number 1, WINTER DOG". The user hears the music-track data 201-1 (S607). After the playback of the music-track data 201-1 is completed, the control unit 203 updates the playback status (during playback) and the playback history (WINTER DOG, 1, ANIMALS, ZOO, J-Pops) in the control information 204 (S608) .

Then, the control unit 203 determines whether or not there is a next track (S609). Since album playback is performed, there is a next track, so return to S603 is performed. The control unit 203 reads out, from the control unit 204, the playback status (during playback), playback history (WINTER DOG, 1, ANIMALS, ZOO, J-Pops) (S603). The control unit 203 reads out, from the metadata 202-2 corresponding to the music-track data 201-2, the track name (SUMMER CAT), track number (2), album name (ANIMALS), artist name (ZOO), genre name (J-Pops) (S604). The control unit 203 inputs the read out complementary setting, control information, metadata into the complement unit 206, and performs the complementary process of generating sentence data in Japanese with the complementary setting, to generate sentence data in accordance with the complementary setting and the respective property values (nouns) constituting the metadata (S901). Further, by comparing the playback status, playback history and metadata, the sentence data is changed as needed. In this case, since playback is being performed and a different track (SUMMER CAT) in the same album as the last time is to be played, move to S908 from S902 is performed, and change to sentence data "Next is track number 2, SUMMER CAT" is performed. Then, the complement unit 206 outputs the sentence data to the control unit 203. The control unit 203 inputs the sentence data to the sound conversion unit 205. The sound conversion unit 205 converts the sentence data into sound data, and outputs to the control unit 203 (S911). The control unit 203 inputs the sound data to the sound playback device 209. The sound playback device 209 performs the playback of the sound data (S912) . The user hears "Next is track number 2, SUMMER CAT". The user hears the music-track data 201-2 (S607). After the playback of the music-track data 201-2 is completed, the control unit 203 updates the playback status (during playback) and the playback history (SUMMER CAT, 2, ANIMALS, ZOO, J-Pops) in the control information 204 (S608).

Then, the control unit 203 determines whether or not there is a next track (S609) . Since album playback is performed, there is a third track, so return to S603 is performed. The control unit 203 reads out, from the control unit 204, the playback status (during playback), playback history (SUMMER CAT, 2, ANIMALS, ZOO, J-Pops) (S603) . The control unit 203 reads out, from the metadata 202-3 corresponding to the music-track data 201-3, the track name (RAT), track number (3), album name (ANIMALS), artist name (ZOO), genre name (J-Pops) (S604). The control unit 203 inputs the read out complementary setting, control information, metadata into the complement unit 206, and performs the complementary process of generating sentence data in Japanese with the complementary setting, to generate sentence data in accordance with the complementary setting and the respective property values (nouns) constituting the metadata (S901). Further, by comparing the playback status, playback history and metadata, the sentence data is changed as needed. In this case, since playback is being performed and a different track (RAT) in the same album as the last time is to be played, move to S908 from S902 is performed, and change to sentence data "Next is track number 3, RAT" is performed. Then, the complement unit 206 outputs the sentence data to the control unit 203. The control unit 203 inputs the sentence data to the sound conversion unit 205. The sound conversion unit 205 converts the sentence data into sound data, and outputs to the control unit 203 (S911). The control unit 203 inputs the sound data to the sound playback device 209. The sound playback device 209 performs the playback of the sound data (S912). The user hears "Next is track number 3, RAT". The user hears the music-track data 201-3 (S607). After the playback of the music-track data 201-3 is completed, the control unit 203 updates the playback status (during playback) and the playback history (RAT, 3, ANIMALS, ZOO, J-Pops) in the control information 204 (S608).

Then, the control unit 203 determines whether or not there is a next track (S609). Since the playback of the album is completed here, there is no next track, so the control unit 203 updates the playback status in the control information 204 to the stopped status, and move to S610 is performed.

For S610, an example of performing notification of the track-selection rule in the control information is explained. The control unit 203 obtains the track-selection rule from the control information 204 (S801) . Next, the obtained track-selection rule (album playback) and the complementary setting 207 (complement in Japanese, area: Kanto) are input to the complement unit 206, and the complement unit 206 generates sentence data (S802) and outputs to the control unit 203. In this case, since album playback is performed, sentence data "Played was the album ANIMALS" is generated. The control unit 203 inputs the sentence data to the sound conversion unit 205, and the sound conversion unit 205 converts the sentence data into sound data, and outputs to the control unit 203 (S803). The control unit 203 inputs the sound data to the sound playback device 209; the sound playback device 209 performs the playback of the sound data; and the user hears "Played was the album ANIMALS" (S804).

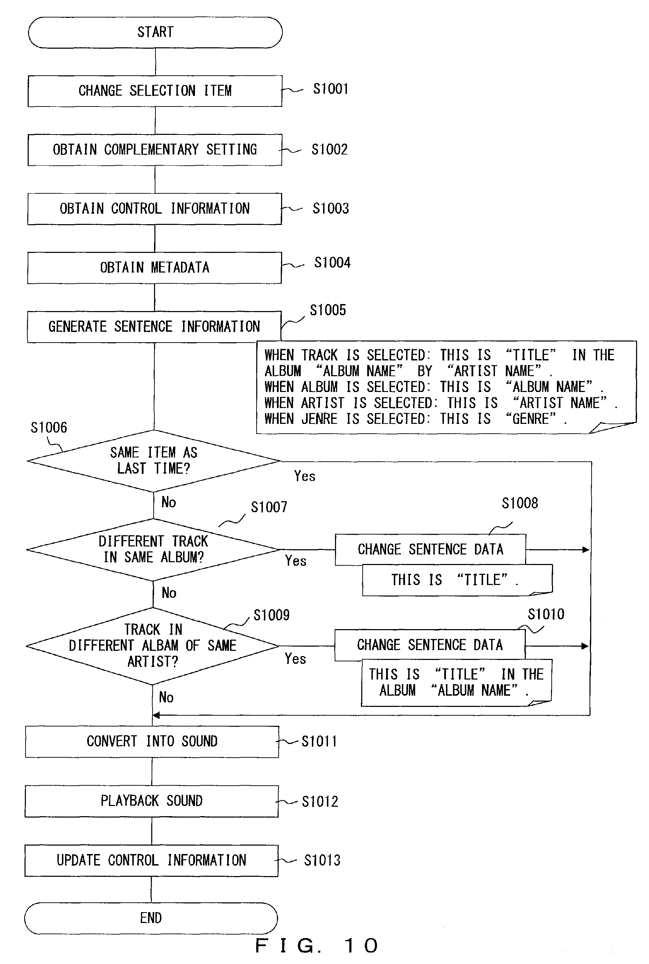

Next, the operation at the time when a selection item is selected in the music playback apparatus is explained, with reference to Fig. 10.

First, in S1001, a user selects a given selection item using the operation device 208. In S1002, the complementary setting is obtained, and the control information is obtained in S1003. In addition, metadata corresponding to the selected item is read out in S1004. Next, in S1005, sentence data is generated from the read out complementary setting, control information and metadata. For example, sentence data "'This is track name' in the album 'album name' by 'artist name'" is generated when a track is selected; sentence data "This is the album 'album name'" is generated when an album is selected; sentence data "'This is 'artist name' is generated when an artist is selected; sentence data "This is 'genre name'" is generated when a genre is selected; and sentence data "This is 'item name' is generated when other items are selected,

Next, in S1006, whether or not the same item as the last time has been selected is determined in S1006. When the same item has been selected (Yes) move to S1011 is performed. When a different item has been selected (No), move to S1007 is performed. In S1007, whether or not a different track in the same album has been selected is determined. When the same track has been selected (No), move to S1009 is performed. When a different track has been selected (Yes), move to S1008 is performed; the sentence data is changed to "This is 'track name'", and move to S1011 is performed. In S1009, whether or not the track is in another album by the same artist is determined. When the track is not in another album by the same artist, (No), move to S1011 is performed. When the track is in another album by the same artist (Yes), move to S1010 is performed; the sentence data is changed to "This is 'track name' in the album 'album name'"; and move to S1011 is performed. In S1010, the sentence data is converted into sound data; in S1012, the sound data is played back; and in S1013, the control information is updated and the process is terminated.

By the operation of the music playback device illustrated in Fig. 10, when a selection item is selected, the notification of the selection item to the user can be performed by sound. In addition, when the notification to the user is performed, the notification can be performed with a redundant part being eliminated, so more natural notification can be performed without giving the user the feeling that notification of information is performed mechanically.

To explain it more specifically, the process is performed as follows.

First, a user selects the music track 201-1 using the operation device 208 (S1001) . Next, the control unit 203 reads out the complementary setting 207 (for example complement in Japanese, area: Kanto) (S1002), Next, the selection unit 203 reads out the selection history (for example, Blue Summer, 2, Colors, ZOO, J-Pops) (S1003).

Next, the control unit 203 reads out metadata corresponding to the item (S1004). Now, since the music-track data 201-1 has been selected, the track name (WINTER DOG), track number (1), album name (ANIMAL), artist name (ZOO), genre name (J-Pops) are read out from the corresponding metadata 202-1.

Next, the control unit 203 inputs the read out complementary setting, control information, metadata to the complement unit 206 (S1005) . The complement unit 206 generates a sentence in Japanese with the complementary setting, Now, the music-track data 201-1 has been selected, so the sentence data in this case becomes "This is WINTER DOG in the album ANIMALS by ZOO".

Further, the complement unit 206 changed the sentence data as needed, by comparing the selection history and the metadata (the processes in S1001, S1007, S1008, S1009, S1010)*.* Now, the selection history is (Blue Summer, 2, Colors, ZOO, J-Pops) and the music-track data 201-1 (metadata: WINTER DOG, 1, ANIMALS, ZOO, J-Pops) has been selected. That is, a track in another album by the same artist as in the last selection has been selected, so the change is performed as "This is WINTER DOG in the album ANIMALS".

Next, the complement unit 206 outputs the sentence data to the control unit 203, and the control unit 203 input the sentence data to the sound conversion unit 205. The sound conversion unit 205 converts the sentence data into sound data, and outputs to the control unit 203 (S1011).

Next, the control unit 203 outputs the sound data to the sound playback device 209, and the sound playback device performs the playback of the sound data (S1012) . The user hears "This is WINTER DOG in the album ANIMALS". The control unit 203 updates the selection history (WINTER DOG, 1, ANIMALS, ZOO, J-Pops) (S1013).

Thus, the music playback apparatus of the embodiment of the present invention has been described in detail.

However, the present invention is not limited to the configuration of the music playback apparatus described above.

For example, the configuration of the above music playback apparatus can be changed so as to generate the sentence data in Kansai dialect when the "area" is set to Kansai in the complementary setting illustrated in Fig. 5; so as to perform sound playback in woman's voice when the "voice" is set to woman' s voice; so as to perform DJ-like sound playback when the "tone of speech" is set to DJ-like. In addition, while the elimination of a redundant part in a case contents of the notification to the user become redundant, the configuration can be easily changed to perform the notification of the similar contents collectively at a given timing. By this, for example, when a series of pieces of music in an album are performed, notification of "The album DEF is going to be played" can be performed in the beginning of the album playback.

Meanwhile, while the explanation has been made with an example of a portable music player as an embodiment of the present invention, it may be applied to stereo components and the like, and further, the present invention may be realized, not as a hardware apparatus but by a software program that operates on an information processing apparatus such as a personal computer.

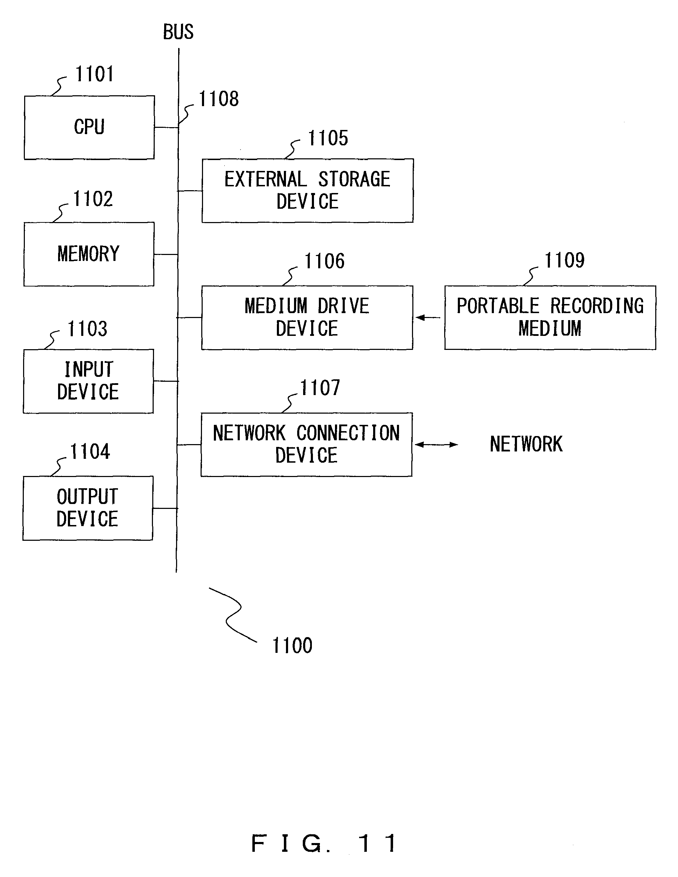

The hardware configuration of an information processing apparatus that realizes the music playback device of the present invention illustrated in Fig. 11.

An information processing apparatus 1100 has a CPU 1101, memory 1102, input device 1103, output device 1104, external storage device 1005, medium drive device 1106, and a network connection device 1107, that are connected to each other by a bus 1108.

The memory 1102 includes, for example, a ROM (Read Only Memory), RAM (Random Access Memory) and the like, and stores a program, music-track data and metadata for realizing the sound playback apparatus.

The CPU 1101 realizes the music playback apparatus by executing a program using the memory 1102.

The input device 1103 is, for example, a keyboard, pointing device, touch panel and the like, and used for the instruction from a user or the input of information. The output device 1104 is, for example, a display, a printer and the like, and used for the display of an inquiry to a user of the information processing apparatus 1100, processing results and the like.

The external storage device 1105 is, for example, a magnetic disc device, optical disc device, magnet-optical disc device and the like. A program and data may be stored in the external storage device, and they may be used by loading them onto the memory 1102 as needed.

The medium drive apparatus 1106 drives a portable recording medium 1109, and accesses its recorded contents. As the portable recording medium 1109, any computer-readable recording medium such as a memory card, memory stick, flexible disc, CD-ROM (Compact Disc Read Only Memory, optical disc, magnet-optical disc, DVD (Digital Versatile Disc) is used. A program and data may be stored in the portable recording medium, and they may be used by loading them onto the memory 1102 as needed.

The network connection device 1107 communicates with an external device via any network (line) such as LAN, WAN and the like, and performs data conversion that accompanies the communication. In addition, it may receive a program and data from an external device, and they may be used by loading them onto the memory 1102.

The program that operates on the information processing device is configured to realize the functions of the control unit 103, the sound conversion unit 105, the complement unit 106, the sound playback unit 109, and performs processes as needed, using the data of music-track data, metadata, control information, complementary setting stored in the memory 1102 of the information processing apparatus. As the music-track data, metadata, control information, complementary setting and the like, those stored in the portable recording medium 1109 that is read out by the medium drive device 1106 may be used, and further, the configuration may be made so as to download and use data on another data providing server via a network.

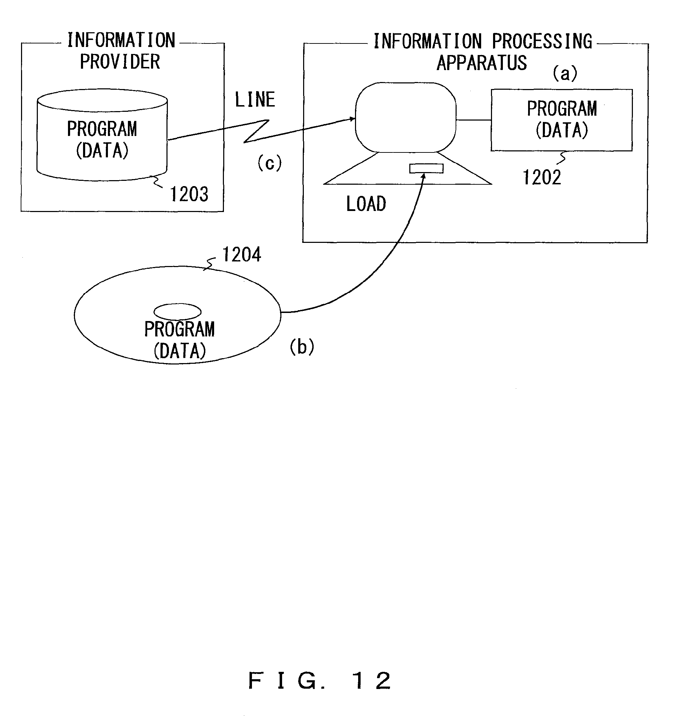

A method of loading a program onto an information processing apparatus in a case in which the sound playback apparatus of the present invention is realized by executing the program on the information processing apparatus is illustrated in Fig. 12.

Fig. 12 (a) illustrates a method for the information processing apparatus 1201 to perform loading of a program and data 1202 stored in an external storage device such as a hard disc of the information processing apparatus 1201.

Fig. 12 (b) illustrates a method of loading a program and data 1204 recorded in a portable-type storage medium such as a CD-ROM and DVD via a medium drive device of the information processing apparatus 1201.

Fig. 12 (c) illustrates a method of loading, via a communication apparatus of the information processing apparatus 1201, a program and data 1203 provided, through a line such as a network, by an information provider.

Thus, the present invention may be configured as a program for making an information processing apparatus such as a computer execute functions that are similar to those realized by the respective configurations illustrated in the principle configuration of and the embodiment of the present invention described above. Meanwhile, the present invention may also be configured as a computer-readable recording medium recording a program for making an information processing apparatus such as a computer execute functions that are similar to those realized by the respective configurations illustrated in the principle configuration of and the embodiment of the present invention described above. Meanwhile, the present invention may also be configured as a computer data signal embodied as a carrier wave expressing the program described above.

Thus, while the sound playback apparatus being an embodiment of the present invention has been described in detail with reference to Fig. 1 through Fig. 12, the present invention may also be applied and used as follows.

For example, if the present invention is to be applied to an AV content editing/creating apparatus that creates contents, for example, in a case of creating an slide-show image with a number of photographs capturing the scenes of a wedding ceremony and favorite music as BGM, it may be used for automatically inserting the description of the BGM. In the editing, the image and BGM are created as contents not with mere addition of tracks but with the addition of announcement "Presented with 'track name'" in the beginning of the slide show. By this, it becomes possible to make it closer to an image-art work than a simple slide show. Meanwhile, there are formats of commercial equipment displaying an advertisement image and the like in a store and on the street that sequentially displays advertisement based on texts and still images while playing BGM, and an effect of making the advertisement more familiar to consumers may be generated by adding an announcement that introduces the BGM in a DJ-like manner before the advertisement image starts in the equipment. Thus, the present invention may be applied to various consumer electronics, portable apparatuses, commercial equipment and so on, without limitation to a simple sound playback apparatus.

The sound playback apparatus of the present invention has been described in detail above: according to the present invention, notification of metadata corresponding to music-track data being the playback target can be performed to a user by sound at a timing of either before the playback, after the playback, during the playback or when a selection is made, and the user can obtain the music-track information without looking at the display device and the like. In addition, the sound playback apparatus of the present invention is capable of performing, not a mere notification of metadata composed of a plurality of nouns, but the notification that is closer as a sentence to a spoken language, by inserting particles, auxiliary verbs and the like between property values (nouns) constituting the metadata, making it more familiar to the user. Furthermore, in a case in which there are a plurality of music tracks being the playback target and there is a property value (noun) that is common among the plurality of music tracks, notification of the common noun can be performed by sound to announce the information about a music-track group; contents of which notification has performed once can be eliminated when performing the notification of each information to the user; the language for notification can be changed; and the wording and tone of speech for notification can be changed according to the time zone and area setting of the user, so it can be said that information can be provided in a more familiar manner. Furthermore, there is a feature that the user can also easily obtain information related to the control of the music playback by sound notification.

## Claims

1. A music playback apparatus playing back music, comprising:
music data storing means for storing a plurality of pieces of music-track data;
metadata storing means for storing metadata corresponding to the respective pieces of music-track data;
sound data conversion means for converting the metadata and so on into sound data;
playback means for playing back the music-track data and the sound data; and
control means for reading out and inputting, to the sound data conversion means, metadata corresponding to the music-track data to be played back from the metadata storing means, and inputting sound data output from the sound data conversion means into the playback means to make the playback means perform sound playback at a timing of either before playback, during playback or after playback of the music-track data.

2. The music playback apparatus according to claim 1, further comprising:
complementary setting storing means for storing a plurality of specifications of formats for inserting a particle and so on between a plurality of property values constituting metadata to generate sentence data; and
complement means for generating sentence data from metadata read out from the metadata storing means on basis of a format stored in the complementary setting storing means; wherein
the control means outputs sentence data generated by the complement means to the sound data conversion means, and the sentence data is played back.

3. The music playback apparatus according to claim 2, wherein
the complementary setting means includes, other than the formats for generating sentence data, a setting of which language, which tone of speech of a man's or woman' s, a dialect of which area, what kind of tone of speech, is to be used.

4. The music playback apparatus according to claim 3, wherein
the complement means determines, in accordance with a status of playback of the music data, which of the formats for generating sentence is to be applied, and when a same property value as in last-played metadata is included, a part corresponding to the property value is eliminated, so that a same content is not included in the generated sentence.

5. The music playback apparatus according to claim 1, further comprising:
control information storing means for storing control information indicating a playback status of the music-track data, wherein
the control means updates the control information on basis of own control, and reads out and input, to the sound data conversion means, control information from the control information storing means, and inputs sound data output from the sound data conversion means into the playback means to make the playback means play back the sound data.

6. The music playback apparatus according to claim 5, wherein
as the control information, a track-selection rule indicating that continuous playback of the plurality of pieces of music-track data is being performed in accordance with a certain rule including random playback is included.

7. The music playback apparatus according to claim 5 or claim 6, wherein
the control information further includes at least volume information of music playback, information of main-part playback indicating that playback of a main part only is being performed.

8. A method for playing back music in a music playback apparatus comprising a music data storage unit storing a plurality of pieces of music-track data and a metadata storage unit storing metadata corresponding to the respective pieces of music-track data, the method comprising the steps of:
when playing back music-track data specified by a user,
reading out metadata corresponding to the music-track data from the metadata storage unit;
converting the metadata into sound data; and
playing back the sound data at a timing of either before playback, during playback or after playback of the music-track data.

9. The music playback method according to claim 8, wherein
the music playback apparatus further comprises a complementary setting storage unit specifying a plurality of formats for converting metadata composed of a plurality of property values into sentence data including at least a particle, auxiliary noun, and
on basis of the format, sentence data is generated from the metadata, and the sentence data is played back at either of the timing.

10. The music playback method according to claim 9, wherein
the complementary setting storage unit also includes a setting of which language, which tone of speech of a man's or woman's, a dialect of which area, what kind of tone speech is to be used, and sentence data is generated on basis of the setting.

11. The music playback method according to claim 10, wherein
in accordance with a status of playback of the music data, which of the formats for generating sentence is to be applied is determined, and when a same property value as in last-played back metadata is included, a part corresponding to the property value is eliminated, so that a same content is not included in the generated sentence.

12. The music playback method according to claim 8, wherein
the music playback apparatus further comprises a control information storing unit storing control information indicating a playback status of the music-track data, wherein
the control information is updated in accordance with a status of playback of the music data, and the control information is converted into sound data and played back.

13. The music playback method according to claim 12, wherein
as the control information, a track-selection rule indicating that continuous playback of the plurality of pieces of music-track data is being performed in accordance with a certain rule including random playback is included.

14. The music playback method according to claim 12 or claim 13, wherein
the control information further includes at least volume information of music playback, information of main-part playback indicating playback of a main part only is being performed.

15. A program for realizing a music playback apparatus by an information processing apparatus comprising a storage unit storing a plurality of pieces of music-track data and metadata corresponding to the respective pieces of music-track data and a processing unit, the program making the processing unit execute:
a step of reading out, when playing back music-track data specified by a user, metadata corresponding to the music-track data from the storage unit;
a step of converting the read out metadata into sound data; and
a step of playing back the sound data at a timing of either before playback, during playback, after playback of the music-track data.

16. The program according to claim 15, wherein
the storage unit further stores a complementary setting specifying a plurality of formats for converting metadata composed of a plurality of property values into sentence data including a particle, auxiliary noun and so on, and
the program makes the processing unit of the information processing apparatus execute:
a step of generating sentence data from the metadata in accordance with the format; and
a step of playing pack the sentence data at either of the timing.

17. The program according to claim 16, wherein
the complementary setting also includes a setting of which language, which tone of speech of a man's or woman's, a dialect of which area, what kind of tone of speech is to be used, and sentence data is generated on basis of the setting.

18. The program according to claim 17, wherein
in the step of generating sentence data, in accordance with a status of playback of the music data, which of the formats for generating sentence is to be applied is determined, and when a same property value as in last-played back metadata is included, a part corresponding to the property value is eliminated, so that a same content is not included in the generated sentence.

19. The program according to claim 15, wherein
the storage unit further comprises control information indicating a playback status of the music-track data, and
the program makes the processing unit execute:
a step of updating the control information in accordance with the playback status of the music-track data; and
a step of converting, into sound data, and playing back, the control information.

20. The program according to claim 19, wherein
as the control information, a track-selection rule indicating that continuous playback of the plurality of pieces of music-track data is being performed in accordance with a certain rule including random playback is included.

21. The program according to claim 19 or claim 20, wherein
the control information further includes at least volume information of music playback, information of main-part playback indicating playback of a main part only is being performed.

22. A recording medium recording a program for realizing a music playback apparatus by an information processing apparatus comprising a storage unit storing a plurality of pieces of music-track data and metadata corresponding to the respective pieces of music-track data and a processing unit, the program making the processing unit of the information processing apparatus execute:
a step of reading out, when playing back music-track data specified by a user, metadata corresponding to the music-track data from the storage unit;
a step of converting the read out metadata into sound data; and
a step of playing back the sound data at a timing of either before playback, during playback, after playback of the music-track data.
